(19) Europäisches Patentamt / European Patent Office / Office européen des brevets

(11) **EP 2 053 759 B1**

(12) **EUROPEAN PATENT SPECIFICATION**

(45) Date of publication and mention
of the grant of the patent:
**29.06.2011 Bulletin 2011/26**

(51) Int Cl.:
***H04B 7/15*** (2006.01)

(21) Application number: **08253413.2**

(22) Date of filing: **21.10.2008**

(54) **Improvements relating to on-channel repeaters**

Verbesserungen in on-Kanal Verstärkern

Améliorations portant sur des répétiteurs sur canal

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.10.2007 GB 0720660**

(43) Date of publication of application:
**29.04.2009 Bulletin 2009/18**

(73) Proprietor: **British Broadcasting Corporation
London WC1A 1AA (GB)**

(72) Inventors:
• **Wiewiorka, Adam ,
c/oBritish Broadcasting Corporation
Tadworth, Surrey, KT20 6NP (GB)**
• **Murray, William ,
c/oBritish Broadcasting Corporation
Tadworth, Surrey, KT20 6NP (GB)**

(74) Representative: **Loveless, Ian Mark
Reddie & Grose
16 Theobalds Road
London
WC1X 8PL (GB)**

(56) References cited:
EP-A- 1 724 946     EP-A- 1 931 063
WO-A-2008/140162     KR-B1- 100 748 642

• **NASR K M ET AL: "Performance of an Echo
Canceller and Channel Estimator for On-Channel
Repeaters in DVB-T/H Networks" IEEE
TRANSACTIONS ON BROADCASTING, IEEE
SERVICE CENTER, PISCATAWAY, NJ, US, vol.
53, no. 3, 1 September 2007 (2007-09-01), pages
609-618, XP011190818 ISSN: 0018-9316**

**Description**

BACKGROUND OF THE INVENTION

This invention relates to on-channel repeaters, that is rebroadcast transceivers which are designed to receive RF (radio frequency) signals, amplify them, and retransmit them onward on the same frequency. Such transceivers are sometimes termed active deflectors.

An on-channel repeater receives a weak signal through a receiving antenna and reradiates an amplified version of this signal on the same frequency using another antenna. Due to the physical proximity between the antennas, as well as reflections off the ground and nearby objects, there may be a significant amount of unwanted feedback from the output of the repeater into its input. If not removed, such feedback causes instability and relaxation oscillations that render the signal unusable. The cancellation of parasitic feedback can be performed by a digital adaptive finite impulse response (FIR) filter which models the path between the antennas. The coefficients of that filter may be estimated using the Least-Mean-Square (LMS) algorithm applied as described in European Patent 772310B ("our earlier patent"), which describes a method and apparatus which has been found to be surprisingly effective in removing the feedback. In this method there is an amplification path between the input and output antennas which provides substantially linear processing and includes a delay sufficient to decorrelate the output and input. The amplification path provides substantially linear processing without demodulation and decoding, and a filter-estimator responsive to the signal in the amplification path correlates the signal in the amplification path before the delay with a noise-like signal taken after the delay to produce a plurality of correlation coefficients. The filter estimator may use the least-mean-square method. An adaptive filter in the form of a transversal filter receives the signal in the amplification path and is controlled by the control coefficients to provide a modified signal, and a combiner combines the modified signal with the signal in the amplification path so as to reduce the effect of the feedback. In this way, unwanted feedback from the output of the active deflector to the input is substantially eliminated. The compensation conveniently makes use of the inherent noise-like property of the signal, as described it is an OFDM signal; however a separate noise signal may be added if necessary.

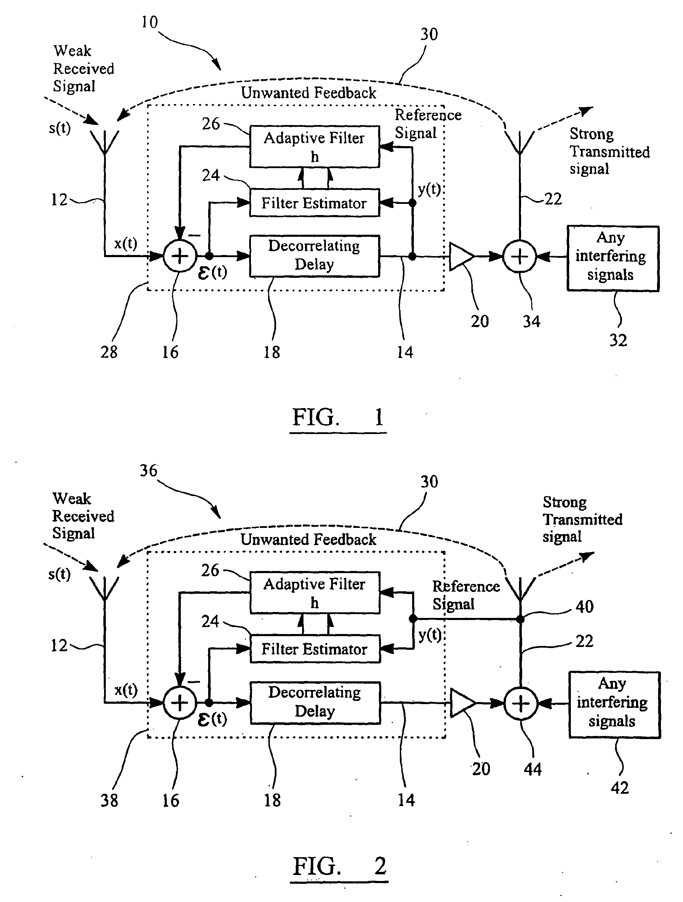

An example of a transceiver of the type described in our earlier patent is shown in Figure 1. The transceiver 10 has a receiving antenna 12 which is coupled to an amplification path 14 which includes an adder 16, a decorrelating delay 18, and an amplifier 20. The output of the amplifier is applied to a transmitting antenna 22. The output of the delay 18 is also applied as a reference signal $y(t)$ to a filter estimator 24, which also receives the output of adder 16, and an adaptive filter 26, which applies an output to the subtractive or inverting input of adder 16. The construction and operation of the whole of this corrector circuitry 28 is described in detail in our earlier patent. Part of the output of the transmitter antenna will be picked up by the receiving antenna as indicated by the dashed line 30, as unwanted feedback. The corrector 28 removes the effect of this feedback.

In the known system of our earlier patent referred to above, the input of the adaptive filter is connected internally to the output of the repeater device as described above and shown in Figure 1. Whereas in that patent the filter processes the retransmitted signal obtained internally in the repeater and tries to model the external parasitic feedback, in an improvement described in our European Patent Application EP 1724946 external feedback from the transmitting antenna feed is used, that includes any distortion, inter-modulation products and interference from adjacent channels. That improvement is illustrated in Figure 2 in which the same references are used as in Figure 1. It is seen that in this case the reference signal y(t), that is the input to the adaptive filter 26 and the reference input to the filter estimator 24, is taken not from within the processor 38 but rather from the transmitter antenna 22, as indicated at 40 . That is to say, the reference signal is taken after the transmitter power amplifier.

Furthermore, as shown, interfering signals on the adjacent channel, indicated at 42, are arranged to be transmitted on the same transmitting antenna as the transmitting antenna 22 used by the repeater, by virtue of a combiner 44. The combiner may in fact be a coupler, or may be absent altogether if no adjacent channel transmitter is present. The system nevertheless still mitigates the effects of power amplifier intermodulation on the feedback cancellation process.

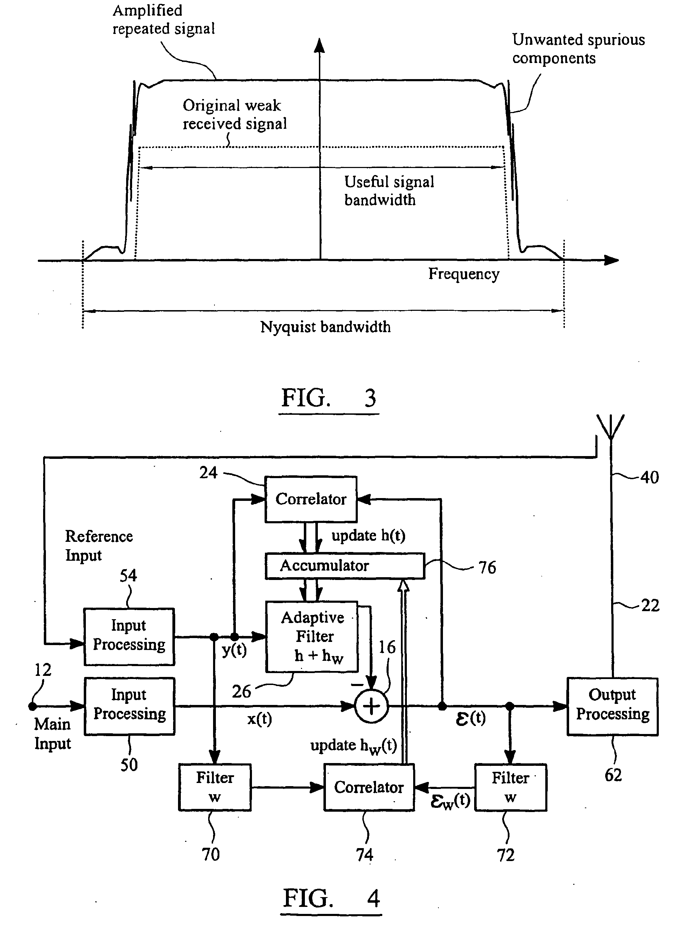

As noted above, the coefficients of the adaptive impulse response filter may be estimated using the Least-Mean-Square (LMS) algorithm, where the LMS algorithm finds the correlations between the signal recovered by the cancellation circuit and a delayed version of it that constitutes the retransmitted signal. If the recovered signal contains components that result from the parasitic coupling between the antennas, they will correlate with the retransmitted signal and adjust the filter coefficients in order to minimise that correlation, thus leaving only the wanted received signal. However we have appreciated that the conventional LMS algorithm has a number of disadvantages. One of them is the "large eigenvalue ratio" problem caused by the input signal having a smaller bandwidth than the Nyquist band. The wanted signal cannot occupy the entire Nyquist band because that would make any subsequent upsampling and/or reconstruction filters impossible to implement. Thus there must be some unoccupied frequency range left between the edge of the signal bandwidth and the Nyquist frequency, where there is little or no signal energy. This is illustrated in Figure 3, where the occupied frequency band extends to about 93% of half the sampling frequency, leaving 7% unoccupied (not shown precisely to scale for clarity). Figure 3 shows the spectrum of the original (main) signal, and the repeated (recovered) signal. The latter also contains unwanted spurious components (see our European Patent application no. 2053812).

However the conventional LMS algorithm operates in the time domain and it treats the entire Nyquist band equally. Therefore, a weak signal in a particular frequency range will contribute less to the solution than a stronger signal in another range. This causes slow convergence for frequencies with small signal levels and if the unwanted feedback to be cancelled changes quickly, filter estimation errors result. This usually manifests itself as spurious tones appearing in the out-of-band regions of the output spectrum. Although most of the time those unwanted tones can be removed by digital and analogue channel filters, occasionally they can cause numerical overflows and instability in the digital part of the repeater, as well as non-linear distortion in analogue circuits such as mixers and amplifiers.

Korean Patent 100748642B1 apparently describes an interference signal elimination method for a mobile communication repeater, which is capable of applying a group-type LMS algorithm using two adaptive constants, in order to increase convergence. The input signal has to be down-converted to baseband as well as converted from digital to analogue for processing.

Reference may also be made to International Patent Application WO2008/140162; our European Patent Application 1931063; and a paper by Nasr K.M. et al., 'Performance of an Echo Canceller and Channel Estimator for On-Channel Repeaters in DVB-T/H Networks', IEEE Transactions on Broadcasting, Vol. 53, no. 3, September, 1, 2007, pages 609-618; which all describe on-channel repeaters that use adaptive filters.

The invention in its various aspects is defined in the appended claims to which reference should now be made. Advantageous features are set forth in the dependent claims.

Preferred embodiments of the invention are described by way of example in more detail below with reference to the drawings. The embodiments described address the issue of spurious components due to large eigenvalue ratio by introducing an additional side-chain with two coefficients that supplements the LMS estimator and targets the out-of-band regions of the spectrum in order to speed up convergence.

An on-channel repeater is described which comprises a receiving antenna for receiving an RF input signal; a transmitting antenna for transmitting a signal on the same frequency as the input signal; and an amplification path between the receiving and transmitting antennas, the amplification path providing substantially linear processing. An input is provided for receiving a reference signal; and means are coupled to the reference signal input for producing a plurality of control coefficients, the coefficients being estimated by use of the least-mean-square algorithm. An adaptive filter is coupled to the reference signal input and controlled by the control coefficients to provide a modified signal. A combiner combines the modified signal with the signal in the amplification path so as to reduce the effect of the feedback and provide an error signal from which the signal applied to the transmitting antenna is obtained.

In this on-channel repeater described and illustrated, the adaptive filter operates with coefficients produced by the least-mean-square algorithm combined with an additional set of coefficients adapted to improve the speed of convergence of the least-mean-square algorithm at out-of-band frequencies outside the bandwidth of the input signal and within the Nyquist bandwidth. The additional set of coefficients is produced by filtering the error signal from the combiner and the reference signal, and by correlating the thus-filtered signals

In the illustrated embodiment the additional coefficients may be generated by a correlator operating on the filtered reference and output signals, or similar more complex arrangements. In particular the additional set of coefficients may be produced by filtering (a) the error signal from the least-mean-square algorithm and (b) the reference signal, and correlating the filtered signals. The filtering comprises high-pass filtering, and the additional coefficients are preferably dependent upon two complex coefficients only, calculated using filtered versions of the error signal from the least-mean-square algorithm and the reference signal.

## BRIEF DESCRIPTION OF THE DRAWINGS

The invention will be described in more detail by way of example with reference to the drawings, in which:

**Figure 1** is a block diagram illustrating a first known on-channel repeater as described in European Patent 772310B;
**Figure 2** is a block diagram illustrating a second known on-channel repeater described in European Patent Application 1724946 which is an improvement on the repeater of Figure 1;
**Figure 3** is a spectrum diagram illustrating the unoccupied portion of the Nyquist band;
**Figure 4** is a block diagram showing a first on-channel repeater embodying the present invention;
**Figure 5** is a block diagram showing a second on-channel repeater embodying the present invention; and
**Figure 6** is a block diagram showing a third on-channel repeater embodying the present invention.

## DETAILED DESCRIPTION OF THE PREFERRED EMBODIMENTS

The theoretical basis for improving operation of the LMS estimator of an on-channel repeater embodying the invention will now be described. The method proposed is described in the context of an arrangement as shown in Figure 2 but is also applicable to the arrangement of Figure 1.

The on-channel repeater recovers the signal $\varepsilon(t)$ from the corrupted input signal $x(t)$ and the reference signal $y(t)$ using an FIR filter 26 of length $N$ with coefficients h:

$$\varepsilon(t) = x(t) - \mathbf{y}(t)^{\mathrm{T}} \mathbf{h}(t) \tag{1}$$

where $\mathbf{y}(t) = [y(t)\ y(t\text{-}1)\ y(t\text{-}2)\ ...\ y(t\text{-}N\text{+}1)]^{\mathrm{T}}$.

The conventional LMS algorithm determines the filter coefficients by successive updates as follows:

$$\mathbf{h}(t + 1) = \mathbf{h}(t) + \mu\varepsilon(t)\mathbf{y}(t)^{\bullet} \tag{2}$$

where $\mu$ controls the speed of convergence and the asterisk is used in conventional manner to indicate complex conjugation. However $\mu$ applies to the entire Nyquist bandwidth regardless of the spectrum of $y(t)$. We have appreciated that this results in slow convergence in the regions where $y(t)$ has low energy, that is the out-of-band regions.

In accordance with this invention we propose to boost those out-of-band frequencies in $y(t)$ by additional filtering. The result is a version of the transform-LMS with the transformation of the form:

$$\mathbf{T} = \mathbf{I} + \mathbf{w}\mathbf{w}^{\mathbf{H}} \tag{3}$$

where w is a frequency selective filter. This method addresses the convergence problem.

Some noise is introduced in the targeted out-of-band regions, proportional to the gain of **w.** Since the recovered signal $\varepsilon(t)$ that is used to estimate filter taps contains the entire signal bandwidth, most of the filter update value for the region of interest is noise. Therefore it would be preferable to filter $\varepsilon(t)$ as well, so that the correlation is performed only within the targeted bandwidth. However, such filtering also introduces additional correlation into $\varepsilon(t)$ and the filter update vector itself becomes correlated. It is therefore further preferred to insert another filter in the reference signal path, as described below.

An additional adaptive filter function $\mathbf{h}_w$ will be used to minimise the energy within a bandwidth defined by w, so that the recovered signal becomes:

$$\varepsilon(t) = \left[x(t) - \mathbf{y}(t)^{\mathrm{T}}\left[\mathbf{h}(t) + \mathbf{h}_w(t)\right]\right] \tag{4}$$

By defining the original LMS error as:

$$\varepsilon_o(t) = x(t) - \mathbf{y}(t)^{\mathrm{T}} \mathbf{h}(t) \tag{5}$$

the new error becomes:

$$\varepsilon(t) = \varepsilon_o(t) - \mathbf{y}(t)^{\mathrm{T}} \mathbf{h}_w(t) \tag{6}$$

In order to estimate $\mathbf{h}_w$ the filtered error signal is defined as follows:

$$\varepsilon_w(t) = \mathbf{w}^{\mathrm{T}}\left[\varepsilon_o(t) - \mathbf{Y}(t)^{\mathrm{T}}\mathbf{h}_w(t)\right] \tag{7}$$

where Y($t$) is a Hankel matrix of reference signal samples. It should be noted that it is approximately equal to:

$$\varepsilon_w(t) \approx \mathbf{w}^{\mathrm{T}}\varepsilon(t) = \sum_n w(n)\varepsilon(t-n) \tag{8}$$

if $\mathbf{h}_w$ changes slowly. The minimisation of $\varepsilon_w(t)$ is performed by finding the derivative of its energy with respect to the filter $\mathbf{h}_w$.

$$\frac{d}{d\mathbf{h}_w}\left|\varepsilon_w(t)\right|^2 = \left[\varepsilon_o(t) - \mathbf{Y}(t)^{\mathrm{T}}\mathbf{h}_w(t)\right]^{\mathrm{H}}\mathbf{w}^{\bullet}\mathbf{w}^{\mathrm{T}}\mathbf{Y}(t)^{\mathrm{T}} \tag{9}$$

Out of a number of possible forms of the update for $\mathbf{h}_w$ one is:

$$\mathbf{h}_w(t+1) = \mathbf{h}_w(t) + \mu\mathbf{w}^{\mathrm{T}}\left[\varepsilon_o(t) - \mathbf{Y}(t)^{\mathrm{T}}\mathbf{h}_w(t)\right]\mathbf{Y}(t)^{\bullet}\mathbf{w}^{\bullet} \tag{10}$$

By assuming that $\mathbf{h}_w$ changes slowly, a further simplification of the form of the update becomes possible:

$$\mathbf{h}_w(t+1) = \mathbf{h}_w(t) + \mu\left[\mathbf{w}^{\mathrm{T}}\varepsilon(t)\right]\left[\mathbf{Y}(t)\mathbf{w}\right]^{\bullet} \tag{11}$$

Thus the update is a correlation between a filtered error and a vector of filtered reference samples. The disadvantage of using coefficients that are applied separately from the original adaptive filter **h** lies in the fact that **h** may under some circumstances try to compensate for the change in response due to $\mathbf{h}_w$. The estimated coefficients may start to acquire ever larger values until numerical limits are reached. Instead, the tap update of $\mathbf{h}_w$ can be added to the update of the original filter h:

$$\mathbf{h}(t+1) = \mathbf{h}(t) + \mu\varepsilon(t)\mathbf{y}_r(t)^{\bullet} + \mu_w\left[\mathbf{w}^{\mathrm{T}}\varepsilon(t)\right]\left[\mathbf{Y}(t)\mathbf{w}\right]^{\bullet} \tag{12}$$

The result is a combined adaptive filter with the desired characteristic of fast convergence and relatively low noise in the out-of-band regions.

An implementation of Equations (1) and (12) will now be described by way of example and with reference to Figure 4 which is based on Figure 2. In particular this figure shows blocks representing various analog and digital circuits present in the repeater. These comprise analog and digital input circuits 50 for the main signal from the input antenna 12, analog and digital input circuits 54 for the reference signal derived from the transmit antenna 22, and digital and analog output circuits 62 for the rebroadcast signal to the output antenna 22.

In accordance with the invention the circuit further includes a frequency-selective filter 70 with filter function **w** coupled to the output of the input circuits 54 for the reference signal, a like filter 72 coupled to the output of the subtractor 16 which passes the main signal, a correlator 74 receiving the outputs of filters 70 and 72, and an accumulator 76 connected between the filter estimator cross-correlator 24 and the coefficient input of the adaptive filter 26, the accumulator 76 also receiving the output of the correlator 74. The double line indicates a vector quantity.

The additional adaptive filter $\mathbf{h}_w$ can be constrained to reduce noise even further. Instead of trying to estimate individual taps of $\mathbf{h}_w$, just two coefficients can be used, one for the lower and one for the upper out-of-band region. This is done by combining the above method with the transform-LMS algorithm. The error can be redefined as:

$$\varepsilon(t) = \left[x(t) - \mathbf{y}(t)^{\mathsf{T}}\mathbf{h}(t) - c_l(t)\mathbf{y}(t)^{\mathsf{T}}\mathbf{h}_l - c_u(t)\mathbf{y}(t)^{\mathsf{T}}\mathbf{h}_u\right] \qquad (13)$$

and its filtered versions:

$$\varepsilon_l(t) = \mathbf{w}_l^{\mathsf{T}}\left[\varepsilon_o(t) - c_l(t)\mathbf{Y}(t)^{\mathsf{T}}\mathbf{h}_l - c_u(t)\mathbf{Y}(t)^{\mathsf{T}}\mathbf{h}_u\right] \qquad (14)$$

$$\varepsilon_u(t) = \mathbf{w}_u^{\mathsf{T}}\left[\varepsilon_o(t) - c_l(t)\mathbf{Y}(t)^{\mathsf{T}}\mathbf{h}_l - c_u(t)\mathbf{Y}(t)^{\mathsf{T}}\mathbf{h}_u\right] \qquad (15)$$

where $\mathbf{w}_l$ and $\mathbf{w}_u$ are filters that target the lower and the upper out-of-band region respectively. There are also two transformations, $\mathbf{h}_l$ for the lower out-of-band region and $\mathbf{h}_u$ for the upper. The objective is to derive two coefficients $c_l$ and $c_u$ that minimise the filtered error $\varepsilon_c$. The derivatives are:

$$\frac{d}{dc_l}\left|\varepsilon_l(t)\right|^2 = \left[\varepsilon_o(t) - c_l(t)\mathbf{Y}(t)^{\mathsf{T}}\mathbf{h}_l - c_u(t)\mathbf{Y}(t)^{\mathsf{T}}\mathbf{h}_u\right]^{\mathsf{H}}\mathbf{w}_l^{*}\mathbf{w}_l^{\mathsf{T}}\mathbf{Y}(t)^{\mathsf{T}}\mathbf{h}_l(t) \qquad (16)$$

and

$$\frac{d}{dc_u}\left|\varepsilon_u(t)\right|^2 = \left[\varepsilon_o(t) - c_l(t)\mathbf{Y}(t)^{\mathsf{T}}\mathbf{h}_l - c_u(t)\mathbf{Y}(t)^{\mathsf{T}}\mathbf{h}_u\right]^{\mathsf{H}}\mathbf{w}_u^{*}\mathbf{w}_u^{\mathsf{T}}\mathbf{Y}(t)^{\mathsf{T}}\mathbf{h}_u(t) \qquad (17)$$

As before, assuming that $c_l$ and $c_u$ change slowly, one can write:

$$\mathbf{w}_l^{\mathsf{T}}\left[\varepsilon_o(t) - c_l(t)\mathbf{Y}(t)^{\mathsf{T}}\mathbf{h}_l - c_u(t)\mathbf{Y}(t)^{\mathsf{T}}\mathbf{h}_u\right] \approx \mathbf{w}_l^{\mathsf{T}}\varepsilon(t) \qquad (18)$$

and

$$\mathbf{w}_u^{\mathsf{T}}\left[\varepsilon_o(t) - c_l(t)\mathbf{Y}(t)^{\mathsf{T}}\mathbf{h}_l - c_u(t)\mathbf{Y}(t)^{\mathsf{T}}\mathbf{h}_u\right] \approx \mathbf{w}_u^{\mathsf{T}}\varepsilon(t) \qquad (19)$$

The coefficient updates can be simplified:

$$c_l(t+1) = c_l(t) + \mu_w\left[\mathbf{w}_l^{\mathsf{T}}\varepsilon(t)\right]\left[\mathbf{h}_l^{\mathsf{T}}\mathbf{Y}(t)\mathbf{w}_l\right]^{*} \qquad (20)$$

$$c_u(t+1) = c_u(t) + \mu_w\left[\mathbf{w}_u^{\mathsf{T}}\varepsilon(t)\right]\left[\mathbf{h}_u^{\mathsf{T}}\mathbf{Y}(t)\mathbf{w}_u\right]^{*} \qquad (21)$$

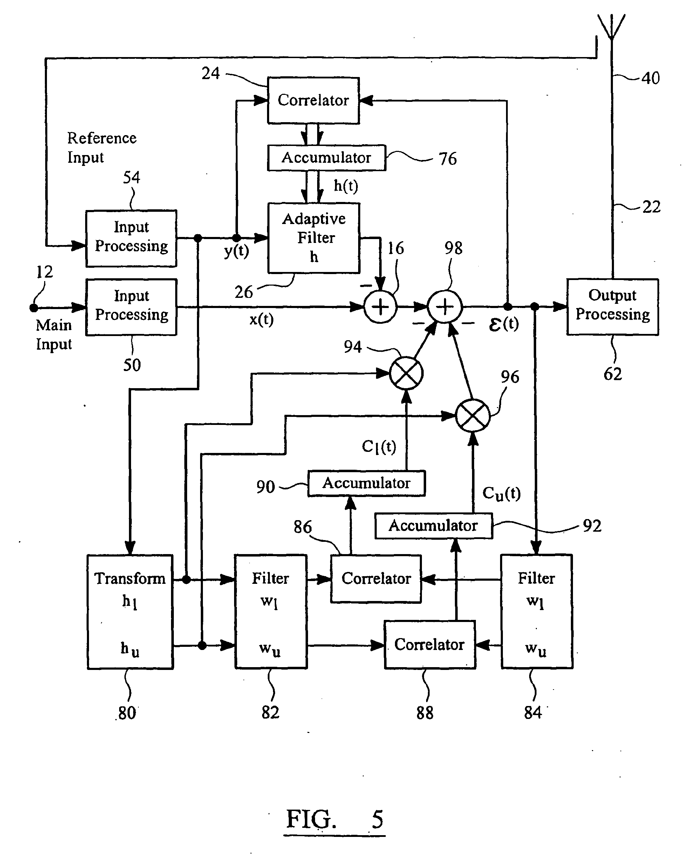

An arrangement which implements Equations (13), (20) and (21) is illustrated in Figure 5. This is based on Figure 4 but the components 70, 72 and 74 are replaced by a more complex arrangement, and accumulator 76 is no longer connected to the correlator 74. Rather, the reference signal is applied to a transform circuit 80 which generates $\mathbf{h}_l$ and $\mathbf{h}_u$ and passes them to a filter 82 which filters them respectively with filter functions $\mathbf{w}_l$ and $\mathbf{w}_u$. Likewise a signal from the main path taken prior to the output circuits 62 is applied to a like filter 84 The two lower and upper signals thus obtained are then correlated in separate correlators 86, 88. Correlator 86 correlates the lower signals while correlator 88 correlates the upper signals. The correlator outputs are passed to respective accumulators 90, 92, the outputs $c_l(t)$ and $c_u(t)$ of which are subtracted from the signal in the main path by a combining (subtracting) circuit 98 located between the subtractor 16 and the output circuits 62 and prior to the connection to the input of the filter 84.

In order to avoid the possibility of divergence between **h**, $c_l$ and $c_u$, the accumulators that hold the computed $c_l$ and $c_u$ can be combined with the accumulator for **h** as follows:

$$\mathbf{h}(t+1) = \mathbf{h}(t) + \mu\varepsilon(t)\mathbf{y}_r(t)^* + \mu_w\left[\mathbf{w}_l^{\mathsf{T}}\varepsilon(t)\right]\left[\mathbf{h}_l^{\mathsf{T}}\mathbf{Y}_r(t)\mathbf{w}_l\right]^*\mathbf{h}_l + \mu_w\left[\mathbf{w}_u^{\mathsf{T}}\varepsilon(t)\right]\left[\mathbf{h}_u^{\mathsf{T}}\mathbf{Y}_r(t)\mathbf{w}_u\right]^*\mathbf{h}_u$$

$$(22)$$

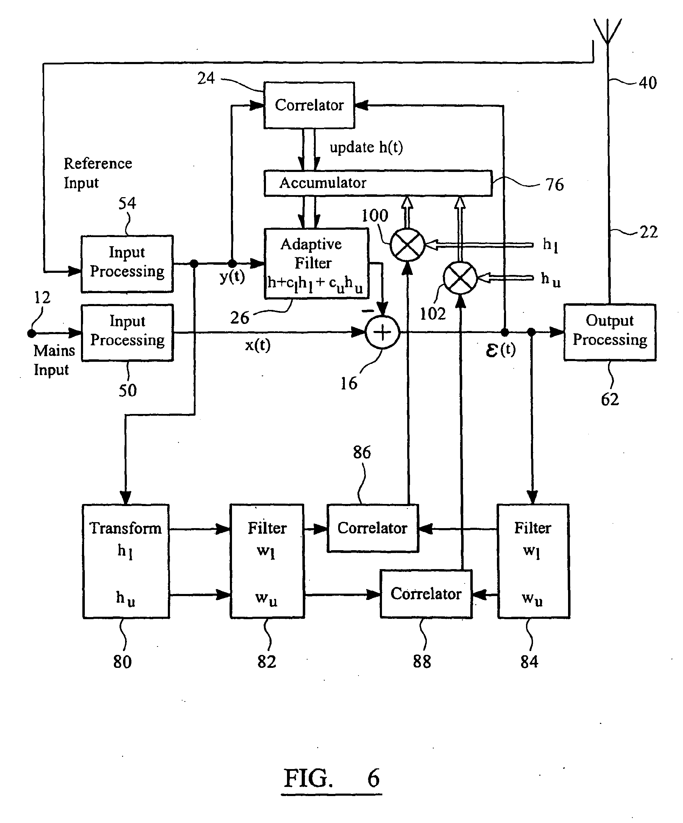

This method is more complex than using $c_l$ and $c_u$ explicitly, as it requires additional vector multiplications by $\mathbf{h}_l$ and $\mathbf{h}_u$. The example shown in Figure 6 implements Equations (1) and (22) and is based on Figures 4 and 5. The components 90, 92, 94, 96 and 98 of Figure 5 are omitted and the outputs of the correlators 86, 88 applied to the accumulator 76 through respective gates 100, 102. Gate 100 receives $\mathbf{h}_l$ and gate 102 receives $\mathbf{h}_u$. The adaptive filter function is now $\mathbf{h} + c_l\mathbf{h}_l + c_u\mathbf{h}_u$ as shown in block 26 on Figure 6.

If the out-of-band regions are symmetrical:

$$\mathbf{h}_u = \mathbf{h}_l^* \quad \text{and} \quad \mathbf{w}_u = \mathbf{w}_l^* \qquad (23)$$

This means that the number of multiplications required for the two coefficient updates as well as the error signal extraction is the same as that needed for only one coefficient. The filter values can conveniently be chosen as follows:

$$\mathbf{w}_l = \mathbf{h}_l \quad \text{and} \quad \mathbf{w}_u = \mathbf{h}_u \qquad (24)$$

and

$$w_{ln} = a_n \exp\left(-\frac{j\pi f_l n}{Nf_s}\right) \qquad (25)$$

$$w_{un} = w_{ln}^* \qquad (26)$$

where:

$f_l$ - centre frequency of the upper out-of-band region targeted by the filter
$f_s$ - sampling frequency
$a_n$ - coefficients of a window function, for example the Hamming window

The final expression is:

$$\mathbf{h}(t+1) = \mathbf{h}(t) + \mu\varepsilon(t)\mathbf{y}_r(t)^* + \mu_w\left[\mathbf{w}_l^{\mathsf{T}}\varepsilon(t)\right]\left[\mathbf{w}_l^{\mathsf{T}}\mathbf{Y}_r(t)\mathbf{w}_l\right]^*\mathbf{w}_l + \mu_w\left[\mathbf{w}_u^{\mathsf{T}}\varepsilon(t)\right]\left[\mathbf{w}_u^{\mathsf{T}}\mathbf{Y}_r(t)\mathbf{w}_u\right]^*\mathbf{w}_u$$

$$(27)$$

It will be seen that the above describes a method for increasing the speed of convergence of a Least-Mean-Square (LMS) algorithm, used in an on-channel repeater, near the edge of or outside the useful bandwidth of the input signal that does not occupy the entire Nyquist band. This is achieved by combining the coefficients of the adaptive filter calculated with the LMS algorithm with another additional set of coefficients that improve convergence. The additional coefficients are calculated by using filtered versions of (a) the error signal from the LMS algorithm and (b) the reference signal applied to the input of the adaptive filter. The additional coefficients may be dependent on only two complex coefficients calculated using filtered versions of the error signal from the LMS algorithm and the reference signal applied to the input of the adaptive filter.

**Claims**

1. An on-channel repeater, comprising;
   a receiving antenna (12) for receiving an RF input signal;
   a transmitting antenna (22) for transmitting a signal on the same frequency as the input signal;
   an amplification path (16, 18, 14, 20) between the receiving and transmitting antennas, the amplification path providing substantially linear processing;
   an input (40) for receiving a reference signal;
   means (24, 76) coupled to the reference signal input for producing a plurality of control coefficients, the coefficients being estimated by use of the least-mean-square algorithm;
   an adaptive filter (26) coupled to the reference signal input and controlled by the control coefficients to provide a modified signal; and
   a combiner (16) for combining the modified signal with the signal in the amplification path so as to reduce the effect of the feedback and to provide an error signal from which the signal applied to the transmitting antenna is obtained; **characterised by** means (70, 72, 74) for producing an additional set of coefficients adapted to improve the speed of convergence of the least-mean-square algorithm at out-of-band frequencies outside the bandwidth of the input signal and within the Nyquist bandwidth; where the additional set of coefficients is produced by filtering (72, 70) the error signal from the combiner (16) and the reference signal, and by correlating (74) the thus-filtered signals.

2. An on-channel repeater according to claim 1, in which the control coefficient producing means includes an accumulator (76) the output of which provides the plurality of control coefficients, and the additional set of coefficients having been produced in the said accumulator (76) is applied to the adaptive filter (26).

3. An on-channel repeater according to claim 1 or 2, in which the additional set of coefficients are in the form of two complex numbers, one for the lower and one for the upper out-of-band frequency region in which the filtering (72, 70; 82, 84) is applied.

4. An on-channel repeater according to claim 1, in which the additional set of coefficients is accumulated (90, 92), multiplied (94, 96) by a transformed version of the reference signal (80), and subtracted (98) from the error signal.

5. An on-channel repeater according to any of claims 1 to 4, in which the coefficient producing means (24) receives the reference signal as one input and the output of the combiner (16) as another.

6. An on-channel repeater according to any of claims 1 to 5, in which the on-channel repeater is operative with OFDM signals.

7. An on-channel repeater according to claim 6, in which the filtering (72, 70) of the error signal and the reference signal comprises frequency-selective filtering at frequencies at or outside the edges of the input signal bandwidth.

8. An on-channel repeater according to any of claims 1 to 5, in which the on-channel repeater is a DAB repeater.

**Patentansprüche**

1. On-Channel Repeater, der Folgendes umfasst:

   eine Empfangsantenne (12) zum Empfangen eines RF-Eingangssignals;
   eine Sendeantenne (22) zum Senden eines Signals auf derselben Frequenz wie das Eingangssignal;
   einen Verstärkungspfad (16, 18, 14, 20) zwischen der Empfangs- und der Sendeantenne, wobei der Verstärkungspfad eine im Wesentlichen lineare Verarbeitung ermöglicht;
   einen Eingang (40) zum Empfangen eines Referenzsignals;
   mit dem Referenzsignaleingang gekoppelte Mittel (24, 76) zum Erzeugen mehrerer Steuerkoeffizienten, wobei die Koeffizienten mit dem LMS-(Least-Mean-Square)-Algorithmus geschätzt werden;
ein adaptives Filter (26), das mit dem Referenzsignaleingang gekoppelt ist und durch die Steuerkoffizienten gesteuert wird, um ein modifiziertes Signal zu erzeugen; und
einen Kombinator (16) zum Kombinieren des modifizierten Signals mit dem Signal im Verstärkungspfad, um den Effekt des Feedback zu reduzieren und ein Fehlersignal bereitzustellen, von dem das an die Sendeantenne angelegte Signal erhalten wird;
**gekennzeichnet durch** Mittel (70, 72, 74) zum Erzeugen eines zusätzlichen Satzes von Koeffizienten zum Verbessern der Geschwindigkeit der Konvergenz des LMS-Algorithmus bei Außerbandfrequenzen außerhalb der Bandbreite des Eingangssignals und innerhalb der Nyquist-Bandbreite; wobei der zusätzliche Satz von Koeffizienten **durch** Filtern (72, 70) des Fehlersignals aus dem Kombinator (16) und dem Referenzsignal und **durch** Korrelieren (74) der so gefilterten Signale erzeugt wird.

2. On-Channel Repeater nach Anspruch 1, wobei das Steuerkoeffizientenerzeugungsmittel einen Akkumulator (76) beinhaltet, dessen Ausgang die mehreren Steuerkoeffizienten bereitstellt und der in dem genannten Akkumulator (76) erzeugte zusätzliche Satz von Koeffizienten an das adaptive Filter (26) angelegt wird.

3. On-Channel Repeater nach Anspruch 1 oder 2, wobei der zusätzliche Satz von Koeffizienten in Form von zwei komplexen Zahlen vorliegt, einer für die untere und einer für die obere Außerbandfrequenzregion, in der die Filterung (72, 70; 82, 84) angewandt wird.

4. On-Channel Repeater nach Anspruch 1, wobei der zusätzliche Satz von Koeffizienten akkumuliert (90, 92), mit einer transformierten Version des Referenzsignals (80) multipliziert und vom Fehlersignal subtrahiert (98) wird.

5. On-Channel Repeater nach einem der Ansprüche 1 bis 4, wobei das Koeffizientenerzeugungsmittel (24) das Referenzsignal als einen Eingang und den Ausgang des Kombinators (16) als einen anderen empfängt.

6. On-Channel Repeater nach einem der Ansprüche 1 bis 5, wobei der On-Channel Repeater mit OFDM-Signalen arbeitet.

7. On-Channel Repeater nach Anspruch 6, wobei das Filtern (72, 70) des Fehlersignals und des Referenzsignals frequenzselektives Filtern bei Frequenzen auf den oder außerhalb der Ränder(n) der Eingangssignalbandbreite beinhaltet.

8. On-Channel Repeater nach einem der Ansprüche 1 bis 5, wobei der On-Channel Repeater ein DAB-Repeater ist.

**Revendications**

1. Répéteur sur canal, comprenant :

une antenne réceptrice (12) pour recevoir un signal d'entrée RF;
une antenne émettrice (22) pour émettre un signal sur la même fréquence que le signal d'entrée;
un chemin d'amplification (16, 18, 14, 20) entre l'antenne réceptrice et l'antenne émettrice, le chemin d'amplification fournissant un traitement sensiblement linéaire;
une entrée (40) pour recevoir un signal de référence;
un moyen (24, 76) couplé à l'entrée du signal de référence pour produire une pluralité de coefficients de contrôle, les coefficients étant estimés en utilisant l'algorithme des moindres carrés;
un filtre adaptatif (26) couplé à l'entrée du signal de référence et contrôlé par les coefficients de contrôle pour fournir un signal modifié; et
un combineur (16) pour combiner le signal modifié avec le signal dans le chemin d'amplification afin de réduire l'effet de la réaction et fournir un signal d'erreur duquel le signal appliqué à l'antenne émettrice est obtenu;
**caractérisé par** des moyens (70, 72, 74) pour produire un jeu supplémentaire de coefficients adaptés pour améliorer la vitesse de convergence de l'algorithme des moindres carrés à des fréquences hors bande hors de la largeur de bande du signal d'entrée et dans la largeur de bande Nyquist; où le jeu supplémentaire de coefficients est produit en filtrant (72, 70) le signal d'erreur du combineur (16) et le signal de référence et en mettant en corrélation (74) les signaux ainsi filtrés.

2. Répéteur sur canal selon la revendication 1, dans lequel le moyen de production des coefficients de contrôle comprend un accumulateur (76) dont la sortie fournit la pluralité de coefficients de contrôle et le jeu supplémentaire de coefficients ayant été produits dans ledit accumulateur (76) est appliqué au filtre adaptatif (26).

3. Répéteur sur canal selon la revendication 1 ou 2, dans lequel le jeu supplémentaire de coefficients est sous forme de deux nombres complexes, un pour la région de fréquence hors bande inférieure et un pour la région de fréquence hors bande supérieure dans lesquelles le filtrage (72, 70; 82, 84) est appliqué.

4. Répéteur sur canal selon la revendication 1, dans lequel le jeu supplémentaire de coefficients est accumulé (90, 92), multiplié (94, 96) par une version transformée du signal de référence (80) et soustrait (98) du signal d'erreur.

5. Répéteur sur canal selon l'une quelconque des revendications 1 à 4, dans lequel le moyen de production des coefficients (24) reçoit le signal de référence comme une entrée et la sortie du combineur (16) comme une autre.

6. Répéteur sur canal selon l'une quelconque des revendications 1 à 5, dans lequel le répéteur sur canal est opérationnel avec des signaux OFDM.

7. Répéteur sur canal selon la revendication 6, dans lequel le filtrage (72, 70) du signal d'erreur et du signal de référence comprend un filtrage sélectif de fréquence à des fréquences aux/ou hors des bords de la largeur de bande du signal d'entrée.

8. Répéteur sur canal selon l'une quelconque des revendications 1 à 5, dans lequel le répéteur sur canal est un répéteur DAB.

Weak
Received
Signal

s(t)

10

30

Unwanted Feedback

Reference
Signal

26 — Adaptive Filter
h

24 — Filter Estimator

y(t)

Decorrelating
Delay

12

x(t)

−

ε(t)

28    16          18          14

20    34

22

Strong
Transmitted
signal

Any
interfering
signals

32

## FIG. 1

Weak
Received
Signal

s(t)

36

30

Unwanted Feedback

26 — Adaptive Filter
h

Reference
Signal

40

24 — Filter Estimator

y(t)

22

12

x(t)

−

ε(t)

Decorrelating
Delay

38    16          18          14

20    44

Strong
Transmitted
signal

Any
interfering
signals

42

## FIG. 2

Amplified
repeated signal

Unwanted spurious
components

Original weak
received signal

Useful signal
bandwidth

Frequency

Nyquist bandwidth

## FIG. 3

Reference
Input

24 — Correlator

update h(t)

Accumulator —76

Input
Processing 54

Adaptive
Filter
h + h_w

26

16

Main
Input 12

Input
Processing

y(t)

x(t)

−

+

$\varepsilon(t)$

50

update h_w(t)

Filter
w

Correlator

Filter
w

$\varepsilon_w(t)$

40

22

Output
Processing

62

70

74

72

## FIG. 4

## FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 772310 B
- EP 1724946 A
- EP 2053812 A
- KR 100748642 B1
- WO 2008140162 A
- EP 1931063 A

**Non-patent literature cited in the description**

- **Nasr K.M. et al.** Performance of an Echo Canceller and Channel Estimator for On-Channel Repeaters in DVB-T/H Networks. *IEEE Transactions on Broadcasting,* 01 September 2007, vol. 53 (3), 609-618